# EUROPÄISCHE PATENTANMELDUNG

(11) **EP 2 336 840 A2**
(43) Veröffentlichungstag der Anmeldung: **22.06.2011**
(21) Anmeldenummer: 10195758.7
(22) Anmeldetag: 17.12.2010
(51) Int. Cl.: G05D 23/32

(54) **Verfahren zur Regelung einer Heizeinrichtung und regelbare Heizvorrichtung**

(30) Priorität: 17.12.2009 DE 102009059203
(71) Anmelder: Domoteck, Ltd., 24959 Tefen (IL)
(72) Erfinder: Klein, Dan, 34984, Haifa (IL)
(74) Vertreter: Habermann, Jan

(57) **Zusammenfassung**

Bei einem Verfahren zur Regelung einer Heizeinrichtung zur Schnee- und Eisfreihaltung von Freiflächen und Dachrinnen ist ein Temperaturfühler (5) benachbart zu einem Heizelement (4) unmittelbar angrenzend an eine gegebenenfalls mit Schnee oder Eis bedeckte Oberfläche (13) angeordnet und wird das Heizelement (4) in zeitlichen Abständen in Betrieb genommen, während des Betriebs des Heizelements (4) mit dem Temperaturfühler (5) die Temperatur der Oberfläche (13) ermittelt und die Heizeinrichtung (2) in Betrieb genommen wird, falls die gemessene Temperatur nicht über einen vorgebbaren Temperaturschwellenwert ansteigt. Bei einer regelbaren Heizvorrichtung zur Schnee- und Eisfreihaltung von Freiflächen und Dachrinnen mit einer Heizeinrichtung und mit einem Temperaturfühler, die jeweils mit einer Steuereinrichtung signalübertragend verbunden sind, ist der Temperaturfühler (5) benachbart zu einem Heizelement (4) unmittelbar angrenzend zu einer gegebenenfalls mit Schnee oder mit Eis bedeckten Oberfläche (13) angeordnet und dass das Heizelement (4) mittels der Steuereinrichtung (3) steuerbar. Der Temperaturfühler (5) und das Heizelement (4) sind in einem Gehäuse (8) angeordnet und der Temperaturfühler (5) und das Heizelement (4) sind thermisch leitend mit einer Gehäuseaußenwand verbunden.

## Beschreibung

Die Erfindung betrifft ein Verfahren zur Regelung einer Heizeinrichtung zur Schnee- und Eisfreihaltung von Freiflächen und Dachrinnen, wobei mit einem Temperaturfühler eine Temperatur gemessen und in Abhängigkeit von der gemessenen Temperatur die Heizeinrichtung betrieben wird.

Es sind Heizvorrichtungen bekannt, die dafür vorgesehen und daran angepasst sind, in der kalten Jahreszeit Freiflächen von Schnee und Eis freizuhalten. Auf diese Weise können beispielsweise mit einem Gefälle versehene Zufahrten zu Garagen oder Parkhäusern zuverlässig von Schnee und von Eis freigehalten werden, um ein gefahrloses Befahren der ansonsten gegebenenfalls vereisten oder rutschigen Zufahrten zu ermöglichen.

Um die Eisbildung in offenliegenden Wasserrinnen und insbesondere in Dachrinnen zu vermeiden, sind vergleichbare Heizvorrichtungen bekannt, die bei drohender Eisbildung betrieben werden und Abflüsse und Dachrinnen ausreichend erwärmen können, um eine Bildung von Eis und eine damit einhergehende Verengung oder einen Verschluss des Ablaufsystems vermeiden können.

Derartige Heizvorrichtungen werden üblicherweise mit einem automatisierten Regelungsverfahren betrieben, so dass bei aktivierter Heizvorrichtung ein situationsangepasster Betrieb der die Freiflächen oder die Dachrinnen aufheizenden Heizeinrichtung durchgeführt werden kann. Ein kontinuierliches Erwärmen der Freiflächen wäre oftmals mit einem unangemessen hohen Energieaufwand verbunden und sollte demzufolge möglichst vermieden werden. Zu diesem Zweck sind verschiedene Verfahren zur Regelung einer Heizeinrichtung bekannt.

Bei einigen Verfahren wird in Abhängigkeit von einem Außentemperaturfühler die Heizeinrichtung nur dann in Betrieb genommen bzw. aktiviert, wenn die Außentemperatur unter einen vorgebbaren Temperaturschwellenwert fällt und unerwünschte Schneeablagerungen oder Eisbildung drohen. Üblicherweise wird die Heizeinrichtung aktiviert und betrieben, sobald und solange die mit dem Außentemperaturfühler gemessene Außentemperatur unterhalb eines Temperaturschwellenwerts von beispielsweise +3°C liegt.

Obwohl derartige Regelungsverfahren unanfällig für Störungen sind und kostengünstig realisiert werden können, weisen derartige Regelungsverfahren erhebliche Nachteile auf. So wird beispielsweise nicht berücksichtigt, ob die Freifläche oder Dachrinne tatsächlich mit Schnee oder Eis bedeckt ist oder bedeckt werden könnte, so dass die Heizeinrichtung auch bei trockenen Witterungsbedingungen in Betrieb genommen wird und dann unnötig Energie verbraucht wird.

Es sind andere Regelungsverfahren aus der Praxis bekannt, bei denen mit einem zusätzlichen Feuchtigkeitssensor gemessen und überwacht wird, ob Schneefall oder Regen eingesetzt hat. Bei derartigen Regelungsverfahren kann der Betrieb der Heizeinrichtung bei trockenen Umgebungsbedingungen deaktiviert werden und die Heizeinrichtung lediglich im Bedarfsfall betrieben werden, falls die Umgebungsfeuchte einen Feuchtigkeitsschwellenwert überschreitet und die Außentemperatur zugleich einen vorgegebenen Schwellenwert für die Temperatur unterschreitet, so dass Schneefall oder Eisbildung befürchtet werden müssen. Durch die Verwendung zusätzlicher Feuchtigkeitssensoren wird die Herstellung von mit diesem Verfahren geregelten Heizvorrichtungen mit zusätzlichem Aufwand und mit Kosten belastet. Zudem sind derartige Regelungsverfahren und insbesondere die dafür erforderlichen Feuchtigkeitssensoren erfahrungsgemäß nicht vollständig zuverlässig und häufig störanfällig.

Aufgabe der vorliegenden Erfindung ist es demzufolge, ein Verfahren zur Regelung einer derartigen Heizeinrichtung so auszugestalten, dass möglichst kostengünstig und zuverlässig ein Betrieb der Heizeinrichtung im Bedarfsfall vorgenommen und ohne eine drohende Gefahr von einer Bedeckung der Freiflächen oder Dachrinnen durch Schnee und Eis vermieden wird.

Diese Aufgabe wird erfindungsgemäß dadurch gelöst, dass der Temperaturfühler benachbart zu einem Heizelement unmittelbar angrenzend an eine gegebenenfalls mit Schnee oder Eis bedeckte Oberfläche angeordnet ist, das Heizelement in zeitlichen Abständen in Betrieb genommen wird, während des Betriebs des Heizelements mit dem Temperaturfühler die Temperatur der Oberfläche ermittelt wird und die Heizeinrichtung in Betrieb genommen wird, falls die gemessene Temperatur nicht über einen vorgebbaren Temperaturschwellenwert ansteigt.

Erfindungsgemäß wird bei dem vorangehend geschilderten Regelungsverfahren die Tatsache ausgenutzt, dass bei Zufuhr von Wärmeenergie zunächst die zum Schmelzen von Schnee und Eis erforderliche Schmelzenergie aufgebracht werden muss und während der zum Schmelzen des Schneebelags oder der Eisschicht erforderlichen Zeitdauer kein Temperaturanstieg erfolgen kann. Wenn die von dem Heizelement erwärmte und von dem Temperaturfühler erfasste Oberfläche ausschließlich mit Regenwasser bedeckt ist, so würden sich das Regenwasser und damit die mit dem Temperaturfühler gemessene Oberflächentemperatur in Abhängigkeit von der durch das Heizelement zugeführten Wärmeenergie erhöhen. Ist die Oberfläche jedoch mit Schnee oder Eis bedeckt, so steigt die mit dem Temperaturfühler gemessene Oberflächentemperatur solange nicht an, wie die von dem Heizelement zugeführte Wärmeenergie zum Schmelzen der Schnee- oder Eisschicht benötigt wird.

Während dieser Schmelzdauer findet keine Erwärmung der Oberfläche über einen für den Schmelzvorgang erforderlichen Temperaturwert von beispielsweise 2-3°C hinaus statt. Erst wenn die Freifläche vollständig von Schnee und Eis befreit ist und ausschließlich von Schmelzwasser bedeckt ist, wird dieses Schmelzwasser und damit die von dem Schmelzwasser bedeckte Oberfläche durch die zugeführte Wärmeenergie kontinuierlich erwärmt.

Indem bei dem erfindungsgemäßen Regelungsverfahren mit dem Temperaturfühler die während der Wärmezufuhr sich einstellende Temperatur der gegebenenfalls mit Schnee oder Eis bedeckten Oberfläche gemessen wird, kann zuverlässig und insbesondere ohne Verwendung eines Feuchtigkeitssensors festgestellt werden, ob die Oberfläche tatsächlich mit Schnee oder Eis bedeckt ist und ein Betrieb der Heizeinrichtung bzw. eine die gesamte Freifläche oder das Dachrinnensystem umfassende Aufheizung erforderlich ist. Da für dieses Regelungsverfahren lediglich ein in geeigneter Weise angeordneter Temperaturfühler und ein Heizelement sowie eine Auswertung des mit diesem Temperaturfühler gemessenen Temperaturverlaufs erforderlich ist, kann das Regelungsverfahren kostengünstig und zuverlässig bzw. weitgehend unanfällig gegen Störungen oder Fehlmessungen betrieben werden.

Das Heizelement bildet zusammen mit dem Temperaturfühler ein Sensor-Heiz-Element, das im Bereich der Oberfläche angeordnet werden sollte und mit dem rasch und zuverlässig ermittelt werden kann, ob die Oberfläche mit Schnee oder Eis bedeckt ist und die Heizeinrichtung in Betrieb genommen werden muss.

Gemäß einer Ausgestaltung des Erfindungsgedankens ist vorgesehen, dass das Heizelement in zeitlichen Abständen von 2 bis 15 Minuten, vorzugsweise von 3 bis 5 Minuten in Betrieb genommen wird. Ein kontinuierlicher Betrieb des Heizelements ist nicht zweckmäßig, da in diesem Fall die von dem Temperaturfühler erfasste Oberfläche dauerhaft von Schnee und Eis freigehalten wird und eine für die Durchführung des Regelungsverfahrens erforderliche Bedeckung der Oberfläche mit Schnee oder Eis unterbleibt. Das Heizelement sollte demzufolge zumindest ausreichend lange abgeschaltet werden, um eine ausreichende Abkühlung der Oberfläche und eine dann beginnende Bedeckung durch Eis oder Schnee zu ermöglichen, um während eines anschließenden Heizbetriebs zuverlässig feststellen zu können, ob Schmelzwärme erforderlich ist oder nicht.

Die zeitlichen Abstände sollten jedoch nicht zu groß vorgegeben werden, damit die Freiflächen im Bedarfsfall rechtzeitig und zuverlässig von Schnee und Eis freigehalten werden können.

Gemäß einer vorteilhaften Ausgestaltung des Erfindungsgedankens ist vorgesehen, dass das Heizelement jeweils für eine Dauer von 1 bis 5 Minuten, vorzugsweise von 2 bis 3 Minuten in Betrieb genommen wird. Bei einer geeigneten Anordnung des Heizelements und des Temperaturfühlers relativ zu der zu überwachenden Freifläche lässt sich bereits bei einem kurzzeitigen Betrieb des Heizelements feststellen, ob sich die Oberfläche kontinuierlich erwärmt und entweder trocken oder ausschließlich mit Wasser bedeckt ist oder ob die Oberflächentemperatur bei etwa 2°C bis 4°C verharrt und die durch das Heizelement zugeführte Wärmeenergie zum Abschmelzen einer Schnee- oder Eisschicht verwendet wird. Nur in diesem Fall wird die Heizeinrichtung für die zu beheizende Freifläche in Betrieb genommen.

Zweckmäßigerweise wird das Sensor-Heiz-Element so dimensioniert, dass die Heizleistung des Heizelements ausreichend ist, um in Abhängigkeit von den Umwelteinflüssen (Wind, Temperatur, Schnee- oder Eisdecke) einen Temperaturanstieg im Inneren eines das Sensor-Heiz-Element umgebenden Gehäuses in einem Zeitraum von wenigen Minuten einen merklichen Temperaturanstieg zu erzeugen, falls das Sensor-Heiz-Element, bzw. das umgebende Gehäuse nicht mit Eis oder Schnee in Berührung steht.

In der Praxis kann das Sensor-Heiz-Element in Zeitabständen von 1 bis 30 Minuten in Betrieb genommen werden, um den Zustand der schnee- und eisfrei zu haltenden Oberfläche oder Rinne zu überprüfen. Findet innerhalb des Prüfintervalls kein nennenswerter Temperaturanstieg in dem Sensor-Heiz-Element, bzw. in dem umgebenden Gehäuse statt, so wird die Heizeinrichtung in Betrieb genommen und erwärmt die Oberfläche, bzw. Rinne, um Schnee oder Eis abzuschmelzen.

Das Sensor-Heiz-Element kann auch während des Betriebs der Heizeinrichtung in zeitlichen Abständen von beispielsweise 30 Minuten zum Überprüfen des Zustands der schnee- und eisfrei zu haltenden Fläche oder Rinne in Betrieb genommen werden, um die Heizeinrichtung wieder abzuschalten, falls innerhalb kurzer Zeit, bzw. innerhalb von wenigen Minuten ein merklicher Temperaturanstieg festgestellt werden kann.

Der Temperaturschwellenwert, der für eine Unterscheidung zwischen einem kontinuierlichen Temperaturanstieg während des Betriebs des Heizelements und einer während des Schmelzens von Schnee und Eis gleichbleibenden Schmelztemperatur unterscheidet, sollte zweckmäßigerweise so vorgegeben werden, dass automatisiert eine zuverlässige Unterscheidung vorgenommen werden kann. Vorsorglich sollte in Zweifelsfällen die Heizeinrichtung in Betrieb genommen werden und nicht ausgeschaltet bleiben, um ein Bedecken der Freifläche durch Schnee oder Eis zuverlässig vermeiden zu können. Erfahrungsgemäß ist vorgesehen, dass der Temperaturschwellenwert im Bereich zwischen +4°C und +8°C vorgegeben wird und vorzugsweise etwa +5°C beträgt.

Wird auf Grund einer festgestellten Bildung einer Schnee-oder Eisschicht die Heizeinrichtung in Betrieb genommen, so kann die Heizeinrichtung beispielsweise nach einer vorgebbaren Heizdauer wieder abgeschaltet werden, um im Anschluss daran erneut zu überprüfen und zu überwachen, ob sich erneut eine Eisschicht bilden würde, bzw. um zu überprüfen, ob die Schnee- oder Eisschicht vollständig abgeschmolzen wurde.

Einer Ausgestaltung des Erfindungsgedankens zufolge ist vorgesehen, dass die in Betrieb genommene Heizeinrichtung solange in Betrieb bleibt, bis die mit dem Temperaturfühler gemessene Temperatur über den Temperaturschwellenwert ansteigt. Zu diesem Zeitpunkt ist die Freifläche oder die Dachrinne vollständig von Schnee oder Eis befreit. Durch eine anschließende Fortsetzung des Regelungsverfahrens bzw. des Überwachens und Überprüfens einer erneuten Schnee- oder Eisbildung kann die Heizeinrichtung im Bedarfsfalle erneut aktiviert und in Betrieb genommen werden. Auf diese Weise kann erreicht werden, dass die Heizeinrichtung möglichst kurz und ausschließlich im Bedarfsfalle aktiviert und betrieben wird.

Es ist vorgesehen, dass das Verfahren nur innerhalb automatisiert vorgebbarer Zeitbereiche durchgeführt wird. So kann beispielsweise die einem Bürogebäude zugeordnete Freifläche lediglich während der üblichen Arbeitszeiten überwacht und von Eis und Schnee freigehalten werden. Außerhalb der Arbeitszeiten, beispielsweise am Wochenende, kann die Heizvorrichtung deaktiviert werden, um einen während des Wochenendes nicht erforderlichen Energieverbrauch vermeiden zu können.

Zusätzlich kann vorgesehen sein, dass das Verfahren nur innerhalb eines vorgebbaren Temperaturbereichs einer Außentemperatur durchgeführt wird. So könnte die Überwachung einer Schnee- oder Eisbedeckung der Freifläche grundsätzlich unterbleiben, sofern die Außentemperatur oberhalb bzw. +8°C oder +5°C ist und keine Gefahr für eine Eisbildung bestehen kann.

Um im Bedarfsfall eine rasche Erwärmung der Oberfläche und ein Abschmelzen einer Schnee- oder Eisdecke zu ermöglichen ist vorgesehen, dass die Heizeinrichtung zeitgleich mit dem Heizelement in Betrieb genommen wird. Auf diese Weise kann bereits während einer Überprüfung, ob ein Betrieb der Heizeinrichtung erforderlich ist, um eine Schnee- oder Eisdecke wieder abzuschmelzen, die Heizeinrichtung aktiviert werden und Wärme erzeugen. Wird mit dem Temperaturfühler festgestellt, dass der Betrieb der Heizeinrichtung notwendig ist, so bleibt die Heizeinrichtung für das vorgegebene Zeitintervall aktiv, während sie zusammen mit dem Heizelement wieder abgeschaltet werden kann, wenn kein Bedarf vorliegt. Die vorsorgliche zeitgleiche Aktivierung der Heizeinrichtung zusammen mit dem Heizelement kann auch auf vorgegebene Zeitintervalle, beispielsweise ausschließlich auf tagsüber oder auf Nutzungszeiten der Zugangswege zu einem Gebäude beschränkt werden.

Die Erfindung betrifft auch eine regelbare Heizvorrichtung zur Schnee- und Eisfreihaltung von Freiflächen und Dachrinnen mit einer Heizeinrichtung und mit einem Temperaturfühler, die jeweils mit einer Steuereinrichtung signalübertragend verbunden sind. Um eine Durchführung der vorangehend beschriebenen Verfahren zur geregelten Ansteuerung der Heizeinrichtung zu ermöglichen, ist erfindungsgemäß vorgesehen, dass der Temperaturfühler benachbart zu einem Heizelement unmittelbar angrenzend zu einer gegebenenfalls mit Schnee oder mit Eis bedeckten Oberfläche angeordnet werden kann und das Heizelement mittels der Steuereinrichtung steuerbar ist.

Vorzugsweise ist vorgesehen, dass der Temperaturfühler und das Heizelement in einem Gehäuse angeordnet sind und der Temperaturfühler und das Heizelement thermisch leitend mit einer Gehäuseaußenwand verbunden sind. Der Temperaturfühler und das Heizelement können beispielsweise in einem Innenraum eines metallischen Gehäuses angeordnet sein. Wird das metallische Gehäuse von Schnee oder Eis bedeckt, so würde die Temperatur der Gehäuseaußenwand solange nicht über die Schmelztemperatur ansteigen, wie das Gehäuse noch von Schnee oder Eis bedeckt ist. Erst wenn der Schnee und das Eis vollständig abgeschmolzen wurden und das Gehäuse von Schmelzwasser bedeckt wird, kann die Temperatur der Gehäuseaußenwand und damit die von dem Temperaturfühler messbare Temperatur der Gehäuseaußenwand bzw. im Inneren des Gehäuses über die Schmelztemperatur ansteigen. Das Gehäuse kann bei einer geeigneten Anordnung des Temperaturfühlers und des Heizelements auch aus einem anderen Material, wie beispielsweise aus einem elastischen Kunststoffmaterial hergestellt sein, in welches der Temperaturfühler und das Heizelement eingebettet sind. Durch das Gehäuse kann in einfacher und kostengünstiger Weise sichergestellt werden, dass durch eindringendes Regenwasser oder Schmelzwasser der Temperaturfühler oder das Heizelement nicht beeinträchtigt oder beschädigt werden.

Je nach Größe des Gehäuses kann es ausreichen, dass der Temperaturfühler und das Heizelement in einem Innenraum des Gehäuses angeordnet sind, ohne dass mit zusätzlichen Vorrichtungen eine gesonderte Wärmebrücke mit der Gehäuseaußenwand bewirkt wird. Es muss lediglich gewährleistet sein, dass die mit dem Temperaturfühler gemessene Temperatur nicht überwiegend oder maßgeblich von der Temperatur des Heizelements, sondern von der Temperatur an der gegebenenfalls mit Schnee oder Eis bedeckten Oberfläche bestimmt wird, die sich unmittelbar auf die Temperatur der zugeordneten Gehäuseaußenwand überträgt.

Um den Betrieb der regelbaren Heizvorrichtung automatisierbar auf vorgebbare Zeitbereiche einschränken zu können ist vorgesehen, dass die Steuereinheit mit einer Zeitschaltuhr verbindbar ist. In gleicher Weise kann ein Betrieb der regelbaren Heizvorrichtung von der Außentemperatur abhängig gemacht werden, indem die Steuereinrichtung mit einem Außentemperaturfühler verbindbar ist.

Es ist ebenfalls denkbar, den Betrieb der regelbaren Heizvorrichtung in Abhängigkeit eines weiteren Temperaturfühlers zu steuern oder zu regeln, der im Bereich der Heizeinrichtung angeordnet ist.

Nachfolgend werden Ausführungsbeispiele des Erfindungsgedankens näher beschrieben, die in der Zeichnung dargestellt sind. Es zeigt:
Fig. 1 eine schematische Darstellung einer regelbaren Heizvorrichtung,
Fig. 2 eine schematische Darstellung eines Gehäuses mit einem darin angeordneten Temperaturfühler und mit einem Heizelement und
Fig. 3 eine schematische Darstellung einer Anordnung der regelbaren Heizvorrichtung im Bereich einer von Schnee und Eis freizuhaltenden Freifläche.

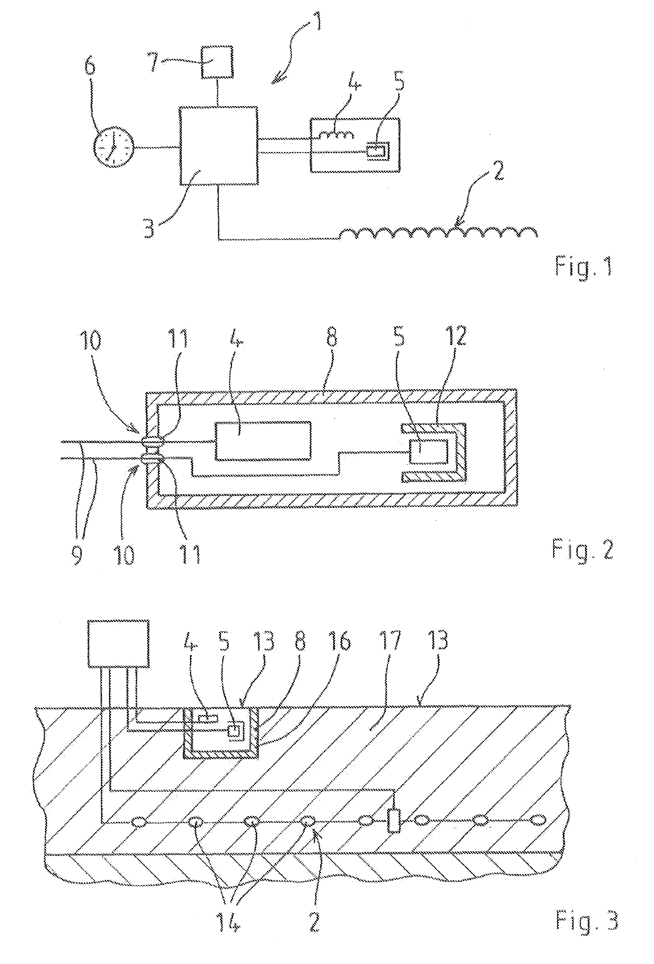

Eine in Fig. 1 schematisch dargestellte regelbare Heizvorrichtung 1 weist eine Heizeinrichtung 2 auf, die an oder in einer zu beheizenden Freifläche angeordnet bzw. verlegt werden kann. Die Heizeinrichtung 2 kann beispielsweise elektrisch betriebene Heizkabel oder Warmwasser führende Leitungen aufweisen. Die Verwendung von elektrisch betreibbaren flachen Heizbändern dürfte in den meisten Anwendungsfällen vorteilhaft sein und auch eine nachträgliche Installation einer regelbaren Heizvorrichtung ermöglichen.

Die Heizeinrichtung 2 ist mit einer Steuereinrichtung 3 verbunden. Mittels der Steuereinrichtung 3 kann die Heizeinrichtung 2 in Betrieb genommen bzw. ein- und ausgeschaltet werden. Die Steuereinrichtung 3 kann auch dazu dienen, die Energieversorgung der Heizeinrichtung 2 zu gewährleisten.

Die Steuereinrichtung 3 ist weiterhin mit einem Heizelement 4 und mit einem Temperaturfühler 5 verbunden. Das Heizelement 4 und der Temperaturfühler 5 können unmittelbar unterhalb einer gegebenenfalls von Schnee oder Eis bedeckten Oberfläche angeordnet werden. Das Heizelement 4 und der Temperaturfühler 5, die unmittelbar unterhalb einer Oberfläche angeordnet sind, bilden ein Sensor-Heiz-Element, mit welchem ermittelt werden kann, ob die Oberfläche von Schnee oder Eis bedeckt ist. Das Sensor-Heiz-Element kann auch beispielsweise in Dachrinnen, Ablaufrohren oder Kanalsystemen angeordnet werden, die mit der Heizeinrichtung 2 schnee- und eisfrei gehalten werden sollen.

Mittels der Steuereinrichtung 3 kann das Heizelement 4 für eine vorgebbare Heizdauer aktiviert und gleichzeitig während dieser Heizdauer mit dem Temperaturfühler 5 die Temperatur an der Oberfläche gemessen werden. Ist die Oberfläche von Schnee oder Eis bedeckt, so steigt die mit dem Temperaturfühler 5 messbare Temperatur lediglich auf einen Schmelztemperaturwert an und verharrt dort so lange, bis das die Oberfläche bedeckende Eis oder der Schnee vollständig abgeschmolzen sind. In diesem Fall wird mittels der Steuereinrichtung 3 die Heizeinrichtung 2 angeschaltet bzw. in Betrieb genommen und mit der Heizeinrichtung 2 die davon erfasste Freifläche aufgeheizt, um die Freifläche von Schnee und Eis zu befreien bzw. freizuhalten.

Die Steuereinrichtung 3 der regelbaren Heizvorrichtung 1 ist zusätzlich mit einer Zeitschaltuhr 6 und mit einem Außentemperaturfühler 7 verbunden, um einen Betrieb der regelbaren Heizvorrichtung 1 in Abhängigkeit von vorgebbaren Betriebszeiten oder einer unterhalb eines Schwellenwerts für die Außentemperatur absinkenden Außentemperatur zu ermöglichen.

In Fig. 2 ist schematisch ein Gehäuse 8 aus Aluminium dargestellt, in dem das Heizelement 4 und der Temperaturfühler 5 angeordnet und wasserdicht von der Umgebung abgeschirmt sind. Die zur Signalübertragung und zur Energieversorgung erforderlichen Kabel 9 werden durch Öffnungen 10 in das Gehäuse 8 geführt. Die Öffnungen 10 sind mittels geeigneter Dichtungen 11 wasserdicht verschlossen.

Um den Temperaturfühler 5 herum befinden sich Ausformungen 12 aus einem gut wärmeleitenden Material. Die Ausformungen 12 sind mit einer in der Schnittansicht in Fig. 2 nicht dargestellten Außenseite des Gehäuses ebenfalls thermisch leitend verbunden, so dass der Temperaturfühler 5 möglichst zuverlässig die Temperatur an der Außenseite des Gehäuses 8 erfassen und an die Steuereinrichtung 3 übermitteln kann. Die Steuereinrichtung 3 weist eine Speichereinheit und einen Prozessor auf, um die von dem Temperaturfühler 5 übermittelten Temperaturwerte speichern und auswerten zu können und einen geregelten Betrieb des Heizelements 4 und der Heizeinrichtung 2 zu ermöglichen.

Bei dem in Fig. 3 dargestellten Ausführungsbeispiel soll eine Oberfläche 13, wie beispielsweise eine Zufahrt oder eine Parkfläche, von Schnee und Eis freigehalten werden. Zu diesem Zweck sind in einem Abstand zu der Oberfläche 13 Heizkabel 14 verlegt, welche die Heizeinrichtung 2 bilden. Unmittelbar unter der Oberfläche 13 ist das Gehäuse 8 mit dem Heizelement 4 und dem Temperaturfühler 5 angeordnet. Wird während eines kurzzeitigen Betriebs des Heizelements 4 durch den Temperaturfühler 5 festgestellt, dass sich die von Schnee und Eis bedeckte Oberfläche 13 nicht über die zum Abschmelzen des Schnees und des Eises erforderliche Schmelztemperatur erwärmt, so wird die Heizeinrichtung 2 in Betrieb genommen und durch die Erwärmung der Heizkabel 14 die Oberfläche 13 von Schnee und Eis befreit.

Zusätzlich kann vorgesehen sein, dass die Steuereinrichtung 3 mit einem zusätzlichen Heizeinrichtungs-Temperaturfühler 15 verbunden ist, der im Bereich der Heizkabel 14 angeordnet ist. Mit diesem Heizeinrichtungstemperaturfühler 15 kann die Heizleistung der Heizeinrichtung 2 überwacht werden, um einen geregelten Betrieb der Heizeinrichtung 2 in Abhängigkeit von der tatsächlich bewirkten Heizleistung vorzunehmen.

Das Gehäuse 8, in dem der Temperaturfühler 5 und das Heizelement 4 angeordnet sind, kann zusätzlich mittels einer geeigneten Isolierungsschicht 16 von dem umgebenden Erdreich bzw. Bodenbelag 17 thermisch entkoppelt sein. Auf diese Weise ist ausschließlich die der Oberfläche 13 zugewandte Gehäuseaußenseite thermisch mit der Umgebung, nämlich insbesondere der Oberfläche 13 in Kontakt, so dass rasch und präzise ermittelt werden kann, ob sich auf der Oberfläche 13 gegebenenfalls eine Schnee- oder Eisdecke gebildet hat und der Betrieb der Heizeinrichtung 2 zum Abschmelzen erforderlich ist.

## Patentansprüche

1. Verfahren zur Regelung einer Heizeinrichtung (2) zur Schnee- und Eisfreihaltung von Freiflächen und Dachrinnen, wobei mit einem Temperaturfühler (5) eine Temperatur gemessen und in Abhängigkeit von der gemessenen Temperatur die Heizeinrichtung (2) betrieben wird, **dadurch gekennzeichnet, dass** der Temperaturfühler (5) benachbart zu einem Heizelement (4) unmittelbar angrenzend an eine gegebenenfalls mit Schnee oder Eis bedeckte Oberfläche (13) angeordnet ist, das Heizelement (4) in zeitlichen Abständen in Betrieb genommen wird, während des Betriebs des Heizelements (4) mit dem Temperaturfühler (5) die Temperatur der Oberfläche (13) ermittelt wird und die Heizeinrichtung (2) in Betrieb genommen wird, falls die gemessene Temperatur nicht über einen vorgebbaren Temperaturschwellenwert ansteigt.

2. Verfahren nach Anspruch 1, **dadurch gekennzeichnet, dass** das Heizelement (4) in zeitlichen Abständen von 2-20 Minuten, vorzugsweise von 5-15 Minuten in Betrieb genommen wird.

3. Verfahren nach Anspruch 1 oder Anspruch 2, **dadurch gekennzeichnet, dass** das Heizelement (4) jeweils für eine Dauer von 1-5 Minuten, vorzugsweise von 2-3 Minuten in Betrieb genommen wird.

4. Verfahren nach einem der vorangehenden Ansprüche, **dadurch gekennzeichnet, dass** der Temperaturschwellenwert in einem Bereich zwischen +4°C und +8°C vorgegeben wird und vorzugsweise +5°C beträgt.

5. Verfahren nach einem der vorangehenden Ansprüche, **dadurch gekennzeichnet, dass** die in Betrieb genommene Heizeinrichtung (2) so lange in Betrieb bleibt, bis die mit dem Temperaturfühler (5) gemessene Temperatur der Oberfläche (13) über den Temperaturschwellenwert ansteigt.

6. Verfahren nach einem der vorangehenden Ansprüche, **dadurch gekennzeichnet, dass** das Verfahren nur innerhalb automatisiert vorgebbarer Zeitbereiche durchgeführt wird.

7. Verfahren nach einem der vorangehenden Ansprüche, **dadurch gekennzeichnet, dass** das Verfahren nur innerhalb eines vorgebbaren Temperaturbereichs einer Außentemperatur durchgeführt wird.

8. Verfahren nach einem der vorangehenden Ansprüche, **dadurch gekennzeichnet, dass** die Heizeinrichtung (2) zeitgleich mit dem Heizelement (4) in Betrieb genommen wird.

9. Regelbare Heizvorrichtung zur Schnee- und Eisfreihaltung von Freiflächen und Dachrinnen mit einer Heizeinrichtung und mit einem Temperaturfühler, die jeweils mit einer Steuereinrichtung signalübertragend verbunden sind, **dadurch gekennzeichnet, dass** der Temperaturfühler (5) benachbart zu einem Heizelement (4) unmittelbar angrenzend zu einer gegebenenfalls mit Schnee oder mit Eis bedeckten Oberfläche (13) angeordnet wird und dass das Heizelement (4) mittels der Steuereinrichtung (3) steuerbar ist.

10. Regelbare Heizvorrichtung nach Anspruch 9, **dadurch gekennzeichnet, dass** der Temperaturfühler (5) und das Heizelement (4) in einem Gehäuse (8) angeordnet sind und der Temperaturfühler (5) und das Heizelement (4) thermisch leitend mit einer Gehäuseaußenwand verbunden sind.

11. Regelbare Heizvorrichtung nach Anspruch 10, **dadurch gekennzeichnet, dass** das Gehäuse (8) mittels einer Isolierungsschicht (16) von dem umgebenden Erdreich oder Bodenbelag (17) thermisch entkoppelt ist.

12. Regelbare Heizvorrichtung nach einem der Ansprüche 9 bis 11, **dadurch gekennzeichnet, dass** die Steuereinrichtung (3) mit einer Zeitschaltuhr (6) verbindbar ist.

13. Regelbare Heizvorrichtung nach einem der Ansprüche 9 bis 12, **dadurch gekennzeichnet, dass** die Steuereinrichtung (3) mit einem Außentemperaturfühler (7) verbindbar ist.

14. Regelbare Heizvorrichtung nach einem der Ansprüche 9 bis 13, **dadurch gekennzeichnet, dass** die regelbare Heizvorrichtung (1) einen weiteren Temperaturfühler (15) aufweist, der im Bereich der Heizeinrichtung (2) angeordnet ist.
